# EUROPEAN PATENT APPLICATION

(11) **EP 2 559 542 A1**
(43) Date of publication of application: **20.02.2013**
(21) Application number: 12183306.5
(22) Date of filing: 16.02.2007
(51) Int. Cl.: B29C 45/16

(54) **Multi-component injection molding device**

(30) Priority: 23.02.2006 US 776703 P
(62) Divisional of application: 07726413.3
(71) Applicant: FOBOHA GMBH FORMENBAU, 77716 Haslach (DE)
(72) Inventor: Armbruster, Rainer, 77709 Wolfach (DE)
(74) Representative: Rentsch Partner AG

(57) **Abstract**

The invention is directed to an improved injection molding device for the making of a product comprising at least two material or color components. A device according to the invention in general comprises a first stationary mold half and a second movable mold half (2,3). A holding frame (6) is arranged between the first and the second mold half. The holding frame may comprise an in-mold transfer system (4) or a movable third mold half.

## Description

### FIELD OF THE INVENTION

The invention lies in the field of injection molding of plastic materials, especially multi-component injection molding of plastic materials.

### BACKGROUND OF THE INVENTION

US6386849, to Kroger et al., describes an injection mold apparatus with an in-mold transfer system e.g. for making of a hollow multi-component product, such as a cover for a ball-point pen. The in-mold transfer system includes an elongate turret with a plurality of product connection pairs attached on opposite sides of the turret. On either side of the turret a first and a second mold half are disposed each having a first and a second row of corresponding cavities for molding a first and a second material component of a multi-component product. The turret is rotatable between the first and the second row of cavities to transport intermediate products made in the first row of cavities from the first row of cavities to the second row of cavities. The product connection pairs have a finger-like shape such that the first material component can be injection molded onto completely surrounding them.

EP 1155802 of the same applicant shows an injection molding device with two production planes (parting planes) with a rotary system which is arranged between a stationary and a moving mould part, and serves for holding a middle mould part. The middle mould part is held by a lower and an upper cross member by way of holding means and is movably arranged about a vertical axis. The cross members are guided on the tie-bars of an injection molding machine. In order to compensate the weight of the middle mould part, the lower cross member, when required, is supported on the machine bed of the injection molding machine. The holding means are arranged displaceable relative to one another, so that the middle mould part may be exchanged. In a first production plane, a first material component is injected into a cavity so that a first part arises. The part of the first material component remains sticking to the middle mould part on opening the mould, and is brought with this into the second production plane by rotating the middle mould part, where, after the closure of the mould, it is actively connected to a second material component. The middle mould part is supported on the tie-bars of an injection molding machine by way of holding devices.

US4734023, to Wolfgang Nesch, describes an injection molding machine for use with at least two melting and injector units. The device includes a fixed die platen, a movable die platen, and fixed spars on which said movable die platen is moved. The die platens mount half-mold parts of injection molds while the other half-mold parts are positioned on a prismatic support base which can be rotated around its axis between these half-mold parts and which is movable in the direction of the fixed spars. The movable die platen mounts movable spars which are forming part of the injection molding machine along which the prismatic support base is guided in the area between the two die platens. On the rear face of the movable die platen which faces away from the support base is positioned at least one drive for the two movable spars, and the movable die platen includes at least one runner for plasticized material injected therein from a melting and injector unit.

EP0895848 of Ferromatik Milacron Maschinenbau GmbH shows a further device with two parting planes. A middle mould part is arranged between a stationary and a movably arranged mould part, and this middle mould part is mounted in a lower and an upper cross member, and is supported on a machine bed of an injection molding device. The middle part is arranged rotary about a vertical axis by 180° and comprises cavities only on two sides. The bearing in the region of the upper cross member may be opened, so that the middle part may be removed.

EP1110449 of Krauss Maffei Kunstofftechnik GmbH shows an injection molding device with two production planes, with a stationary and a movable mould half. A mould middle part is arranged between the two mould halves, and is held on one side by way of a guide admitted in the machine bed of an injection molding machine, and is rotatably arranged about an axis. The injection molding machine is adapted to meet these special demands. The device described in EP'449 is suitable for manufacturing parts of several plastic components.

EP1 058612, to Jes Gram, describes a procedure and a stack mold with two separation planes for sequential molding of an assembled object. The device comprises a stationary front mold half, a movable back mold half and at least one turnable middle mold half which is arranged as an interconnecting mold half between the front and the back mold half such that the front and the back mold half do not get in direct contact to each other. The stack mold can be opened along a first and a second separation plane which is arranged between the front and the middle mold half and the middle and the back mold half. The front mold half, the back mold half and the middle mold half each comprise corresponding cavities which interact with each other in closed position of the stack mold in the region of the separation planes. After molding of a first part of an object, the middle mold half is turned around a rotation axis before molding of a following part of the object takes place. The first part of the object seams to be transported from the first to the second separation plane in that it stays temporarily attached in it's cavity of the turnable middle mold half. Figure 9 shows an embodiment where the middle mold half is divided in two smaller middle mold halves arranged laterally next to each other. Each of these small mold halves is arranged rotatable around a rotation axis. Intermediate products are transported from the first to the second separation plane in that they stay temporarily attached in their cavities of the turnable middle mold halves. One disadvantage of the described procedure consists in that injection of liquefied plastic material must take place from opposite sides such that at least one injection unit must be placed movable.

US5090889, to Walter Döber et al., describes an injection blow tool with four levels for synthetic plastic injection casting machine. The tool has a casting matrix with a plurality of casting molds and an associated matrix which is movable relative to the casting matrix. The matrix is provided with mold cores corresponding to the casting molds whereby the matrix with the mold cores is designed as turning body turnable about a turning angle of at least 90° relative to the casting matrix. The tool comprises in two levels two laterally adjacent turning matrix.

### SUMMARY OF THE INVENTION

The invention is directed to an improved injection mold system for making of multi-component plastic articles whereby a first material component is injected in at least one first cavity by a first injection unit and a second material component is injected in at least one second cavity by a second injection unit.

A device according to the present invention normally comprises a stationary first mold half, an in a first direction movable second mold half and an integrated holding means suitable to hold and linearly guide in the first direction a third intermediate mold halve, arranged in-between and spacing the first and the second mold half apart, or an in-mold transfer system comprising at least one rotary arm suitable to transfer an intermediate product from a first to a second cavity. The integrated holding means for the third intermediate mold half or the in-mold transfer system preferably forms part of the injection molding device according to the present invention. In that the holding means is preferably integrated in the injection molding device it becomes possible to use the system with almost any available ejection molding machine with or without rods.

The third intermediate mold half may be designed as one or several cubes arranged rotary around at least one rotation axis in general perpendicular to the first direction. Alternatively the intermediate mold half may be designed as a rigid non-rotatable mold half hold by the integrated holding means. Media, such as water, oil, electricity and/or air which are necessary for the operation of the intermediate mold half or the in-mold transfer system, are preferably device supplied from a lateral position. In a preferred embodiment the supply takes place from above or bellow. If appropriate an ejection means to eject a final product are integrated in at least one mold half and/or the intermediate mold halve, respectively the in-mold transfer system. Therefore a final product can be ejected form the second mold half or the third mold half, respectively the in-mold transfer system.

An embodiment of a device according to the present invention comprising an in-mold transfer system differs from the known stack mold systems, with two separation planes for two component injection molding, in that the device comprises no middle mold half as such, which is arranged between and spacing apart a first stationary and a second movable mold half. Therefore the device does not comprise two fully established separation planes along which the device is opened and closed. Instead, an intermediate product is transported by the in-mold transfer system from a first to a second cavity, arranged in general in a single separation area of the injection mold device. The in-mold transfer system comprises at least one rotary device arranged rotatable around a rotation axis and displaceable with respect to a first stationary and an in a first direction (x-direction) moveable second mold half. The rotation axis is arranged in general perpendicular to the first direction.

In an embodiment an at least one rotary arm or a third mold half is held by a holding frame which is supported by a holding means comprising rods arranged in general parallel to the first direction and being integrated in the first and/or the second mold half. If appropriate the rods can be at least temporary free at one end, when the device is in open position. The holding frame comprises linear bearings by which it is arranged movable along the rods such that the relative position between the at least one rotary arm and the mold halves is adjustable when the mold is opening or closing. A driving means determines the position of the holding frame with respect to the first and the second mold halves. In a preferred embodiment the driving means comprises a linear hydraulic drive. Depending on the field of application the shafts can be designed alternatively or in addition as threaded rods, acting simultaneously as holding and driving means. Therefore the threaded rod is arranged at one position fix and at another in a counter element with a corresponding internal thread such that by turning of the threaded rod a linear displacement is achieved. If appropriate the holding frame is supported by the rods and/or the machine bed of an injection molding machine.

In a further embodiment the holding means are integrated into the injection molding device, forming part of it, whereby at least one rod interconnects the first and the second mold half. If appropriate at least one rod comprises on one side a thread with a positive pitch and on the other side a thread with a negative pitch. The threaded rod is supported in the area of the threads in openings of the first and the second mold halves comprising threaded counter elements arranged fixed, non-rotatable. The holding frame is interconnected to the threaded rod in-between the two threads whereby the rod is arranged pivotable around its length-axis. While displacing of the first and the second mold half with respect to each other the threaded rod acts as coordination device such that the holding frame remains in the middle of the first and the second mold have. In that each side has a diverse pitch a position out of the centre can be achieved. Depending on the field of application the rods can act as only supporting means for the holding frame of the at least one rotary arm. Alternatively or in addition the holding frame can be supported by the rods and/or the machine frame of an injection molding machine in which the device is mounted. If appropriate the holding frame can be separated into multiple elements, e.g. such that the rotary arm or a middle mold half can be exchanged.

In a still further embodiment the rods are designed as relatively short stubs arranged parallel to the first direction and rigidly interconnected at one end to a mold half. The stubs are at one end in general free but may be, when the mold is closing, temporarily supported by appropriate linear bearings arranged at the opposite mold half. This temporary support may be used to guarantee precise closing and interaction of matching parts while closing of the mold. In this embodiment the holding frame is driven e.g. by coordinated hydraulic plungers or electric drives or by threaded rods acting as linear drives.

Depending on the field of application the at least one rotary arm may comprise two opposite lateral elements suitable to hold a semi-product during transportation from a first cavity into a second cavity. If appropriate the holding means may thereby in closed position of the injection molding device form at least one half of a cavity or part of at least one half of a cavity. If the rotary arm comprises more than one lateral element the lateral elements can be arranged next to each other spaced apart. When the device comprises several laterally adjacent rotary arms the lateral elements can be arranged comb-shaped along the rotary arm. If appropriate, space can be saved especially during rotation, when the comb-shaped lateral elements of two adjacent rotary arms are offset with respect to each other, such that they can temporarily comb during rotation in the same or opposite rotating directions.

In an embodiment of a device according to the present invention the rotary arm has an in general Z-shaped cross section with two lateral elements (outer legs of z-shaped cross-section) carrying on opposite sides two cavities, respectively parts of cavities, arranged axially-symmetric with respect to the rotation axis of the rotation arm. The cavities are arranged at the outer legs of the Z-shaped cross-section extending in general perpendicularly to the rotation direction, respectively parallel to the rotation axis. In closed position of the injection molding device the lateral elements interact on at least one side with opposite corresponding cavities arranged at the first and/or the second mold half. In a further embodiment according to the present invention the lateral elements are forming only part of a cavity whereby the rest of the cavity is formed e.g. by the first and the second mold half by direct interaction. In this embodiment the at least one rotation arm may be completely surrounded by the first and the second mold half and the rotation arm is acting as in-mold transfer system mainly designed for displacing of a semi-product from a first into a second location. One advantage of such an in-mold transfer system consists in that in difference to a conventional stack mold turning system the first and the second injection unit may be arranged stationary which results in a simplification of the setup and an in general faster cycle time. The first and the second material component are thereby injected via channels of the first stationary mold halves into cavities formed between the first mold half and lateral elements of the rotary device or lateral elements of the rotary device and the second mold half and, if appropriate, between cavities formed by the first and the second mold halves. The holding frame may comprise only one or several adjacent rotary arms rotating parallel or in opposite directions. Each rotating arm may comprise one or several adjacent lateral elements each comprising at least one cavity or part of a cavity suitable to interact with cavities of the first and/or the second mold half.

A further embodiment is directed to an injection molding device for making of a product comprising at least one first and at least one second material component. The injection molding device comprises a stationary first mold half, an in a first direction displaceable second mold half and a holding frame arranged between the first and the second mold half and displaceable in the first direction. The holding frame comprises at least one rotary arm, which is arranged pivotably around a rotation axis and which comprises at least one lateral element of an in-mold transfer system with a pair of movable cavity halves. The cavity halves are arranged axially symmetric with respect to the rotation axis and each other, forming in a closed position of the device at least part of first and second cavities by interacting with first and second cavity halves arranged at the first and the second mold half. If appropriate part of the second cavity is formed by direct interaction of the first and the second cavity halves of the first and the second mold halves. In general the stationary first mold half comprises a first material inlet interconnected by a first channel to the first cavities and a second material inlet interconnected by a second channel to the second cavities. The material inlets are suitable to guide liquefied plastic material into the first and the second cavities during an injection process. In a preferred embodiment the lateral element has an in general z-shaped cross section. The holding frame is preferably supported by a holding means integrated in the injection molding device, such that no expensive special equipment is necessary. The holding means may comprise rods arranged parallel to the first direction and interconnected to the stationary first mold half and the holding frame comprises linear bearings by which it is displaceable along the rods. The rods may be designed as being in general free at one end. The rods at their free end may temporarily be supported by sprocket holes when the injection molding device is in closed position. In a preferred embodiment the holding frame comprises three rotary arms arranged laterally adjacent to each other. Each rotary arm may comprise two pairs of lateral elements arranged adjacent to each other each pair being arranged in one of four openings of the holding frame, whereby each rotary arm is supported on each side and in the middle by a pivot bearing, which results in very stable and robust device. If the product to be made comprises an undercut or is difficult to demold, at least one rotary arm may comprise a wedge element which controls the position of at least one slider forming part of the first and/or the second mold half.

In the following in a non-completing list a range of products is mentioned which are preferably made by a method and a device according to the present invention:
● Closures, especially hinged closures having a two colored or two-component design wherein a first area/component is made out of a first material/color and a second area/component is made out of a second material/color.
● Toothbrushes e.g. comprising a first area made out of a soft material and a second area made out of a rigid material resulting in a specific combination.
● Two component items for portable devices such as mobile phones or hand-helds, e.g. touch pads made out of a softer material integrated in a rigid shell or transparent screening grids for displays integrated in a rigid outer shell.
● Covers and cases e.g. for the automotive industry such as cases for car keys or covers in two components.

### BRIEF DESCRIPTION OF THE DRAWINGS

The terms and expressions which have been employed are used as terms of description and not of limitation, and there is no intention of excluding any equivalents of the features shown and described or portions thereof in the use of such terms and expressions, but it is recognized that various modifications are possible within the scope of the invention claimed.

For a more complete understanding of the present invention, including its features and advantages, reference is now made to the detailed description of the invention, taken in conjunction with the accompanying drawings, in which:
- Fig.1: A first embodiment of an injection molding device according to the present invention in a first perspective view;
- Fig. 2: The injection molding device according to Figure 1 in a second perspective view;
- Fig. 3: A cavity unit of the device according to the Figure 1 in a side view;
- Fig. 4: The cavity unit according to Figure 3 in a first perspective view;
- Fig. 5: The cavity unit according to Figure 3 in a second perspective view.

### DETAILED DESCRIPTION OF THE PREFERRED EMBODIMENTS

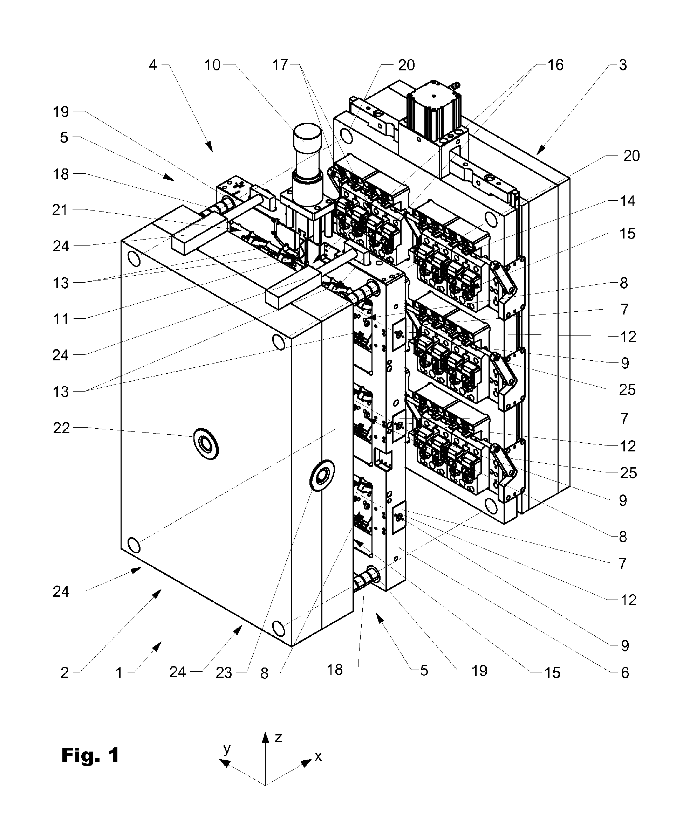

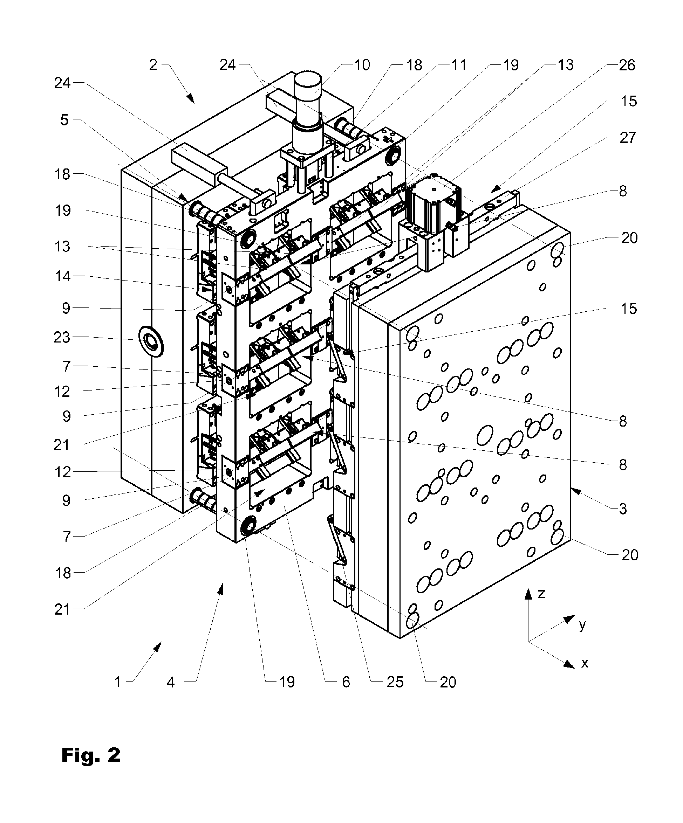

**Figure 1** is showing an embodiment of an injection molding device 1 for a first and a second material component according to the present invention in a perspective view. **Figure 2** is showing the same device 1 in a second perspective view. The device 1 comprises a first stationary and a second in a first direction (x-direction) movable mold half 2, 3. The first and the second mold halves 2, 3 are normally attached to holding plates of an injection molding machine (both not displayed). In between the first and the second mold half 2, 3 an in-mold transfer system 4 is visible, which is supported by a holding means 5 forming part of, respectively being integrated in the device 1. The in-mold transfer system 4 comprises a holding frame 6 which supports by pivot bearings 7 three rotary arms 8 arranged in general parallel to each other. If appropriate a different number of rotary arms is possible. The rotary arms 8 each comprise an axle 12 with four lateral elements 13 arranged adjacent. The rotary arms 8 are arranged rotatable around rotation axis 9 (y-direction) and are driven by a linear drive 10, here in form of a hydraulic cylinder, which is attached to the holding frame 6, via a control shaft 11 and gears (not visible) arranged in the middle of axles 12. Alternative electrical or pneumatic driving units may be appropriate.

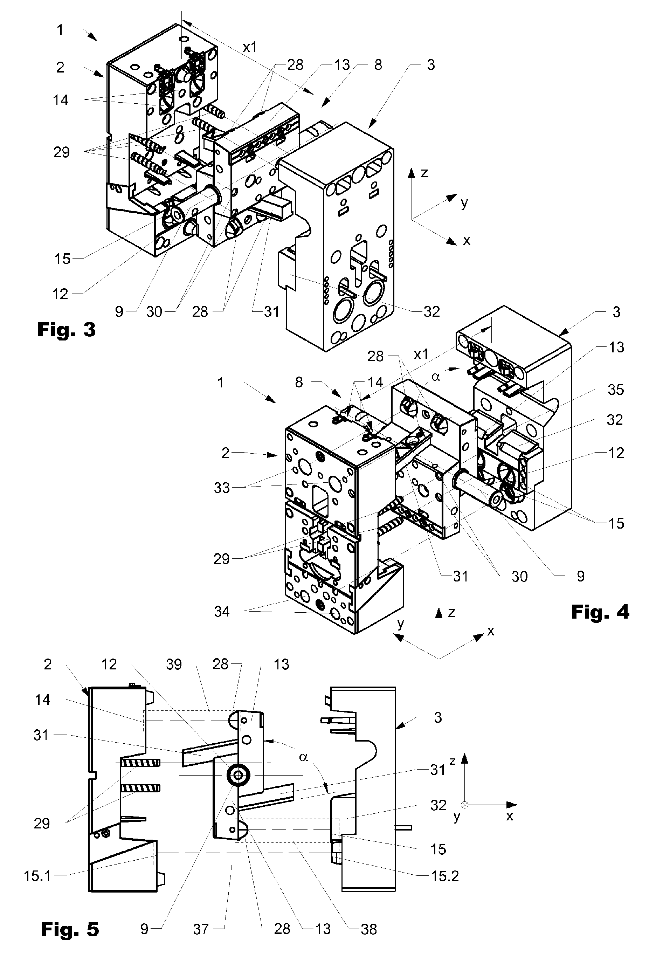

When the device is in an open position (as displayed) the lateral elements 13 of the rotary arms 8 can be rotated by the linear drive 10 by 180° from a first into a second position. Thereby it becomes possible to transport an intermediate products (not shown in detail) from first positions in first cavity halves 14 into second positions in second cavity halves 15, in general offset by 180° with respect to the first position. The intermediate products made in first cavities are during transportation temporary held by movable cavity halves 28 (see **Figures 3** to **5****)** arranged at the lateral elements 13 of the rotary arms 8. To avoid that the intermediate products separate form the movable cavity halves appropriate clamping means are present. A clamping means may consist in an appropriate geometrical undercut, a positively controlled slider, vacuum or any other suitable means. E.g. when a two colored hinged closure comprising a lid with a pin which sealingly closes in closed position an orifice in a base of the closure is made by a device according to the present invention, the pin of the lid may temporarily engage with an appropriate opening of the movable cavity half.

In the shown embodiment the lateral elements 13 are on one side (first position) forming one half of the first cavities. In the second positions the lateral elements part of one half of the second cavities. The remaining of the second cavities is formed by cavity areas 16, 17 of the first and the second mold halves 2, 3 which are in this area reaching through openings 21 of the holding frame 6 and interacting directly with each other (see Figure 5).

The holding frame 6 of the shown embodiment is supported and displaceable along four relatively shorts rods 18 (stubs) of the holding means 5. The rods 18, which are free at one end, are arranged parallel to the first direction (x-direction) and interconnected at the other end to the first mold half 2. The rods 18 are interacting with axial bearings 19 arranged at the holding frame 6. When the device 1 is closing the free ends of the rods 18 engage with sprocket holes 20 arranged at the second mold half 3 guaranteeing save closing and appropriate interacting of the device 1. The holding means 5 are fully integrated in the device 1 and therefore offer the opportunity that no special injection molding machine is necessary to run the device 1. The holding frame 6 is, as shown here, suitable to support one or more rotary arms 8 of the in-mold transfer system 4. Alternatively the holding frame is suitable to carry a third mold half (not shown) arranged in-between and spacing apart the first and the second mold half 2, 3. The third mold half comprises in general comprising on at least two opposite sides and radially spaced apart cavities interacting in a first and in a second mold separation plane with corresponding cavities of the first and the second mold halves. If appropriate the third mold half may be arranged at least partially movable in further direction and/or rotatable about a rotation axis arranged parallel or perpendicular to the first direction (x-direction). The holding frame 6 of the shown embodiment is displaced along the rods 18 by four linear drives, here in the form of hydraulic cylinders 24. Depending on the field of application the holding frame 6 may be in addition or alternatively be supported and held by the linear drives 24.

One advantage of the described in-mold transfer system 4 consists in that the injection units (not shown in detail) for the first and the second material components may be arranged stationary which results in a simplification of the overall setup of the device 1. The first stationary mold half 2 comprises a first and a second inlet 22, 23 which are interconnected by channels arranged in the first mold half 2 with first and the second cavities 14, 15. The first and the second inlet 22, 23 serve for injection of a first and a second liquefied plastic material into the cavities 14, 15 during injection molding, when the mold 1 is closed. The first inlet 22 is arranged on the rear side of the first mold half 2 such that it can be interconnected with a first injection unit through a stationary mold holding plate of an injection molding machine. The second inlet 23 is arranged laterally such that it can be interconnected with a second injection unit arranged laterally to the device 1. Alternatively or in addition an inlet for liquefied plastic material may be arranged on the top side of the first mold half 2. The shown device 1 further comprises here three lever type closing means 25, extending in lateral direction (y-direction) across the inner face of the second mold half 3, for closing of a lid of a hinged closure after injection molding. The closing means 25 are actuated by a second linear drive 26 arranged on top of the second mold half 3 and interacting with the closing means by a second control shaft 27.

As visible in **Figures 1** and **2****,** the rotary arms 8 are shown in an intermediate rotary position between the first and the second cavity position 14, 15 rotated about 45° around rotation axis 9. This situation typically occurs, when the device 1 is opened after a first material component has been injected in the first cavities 14 formed by the lateral elements 13 and the first mold half 2 and a second material component has been injected in the second cavities 15 between the lateral elements 13 and the second mold half 3 and/or the first mold half 2 and the second mold half 3. Depending on the filed of application the injection of the material components takes place simultaneously or staggered. The second mold half 3 is separated from the first mold half 2 by the opening movement of the mold holding plates of the injection molding machine (both not visible) onto which the first and the second mold halves 2, 3 are attached to. The holding frame 6 is separated from the first mold half in that it is moved along the rods 18 actuated by the linear driving means 24 until the holding frame reaches an opening position sufficiently far spaced apart from the first and the second mold half, such that the rotary arms 8 can be rotated freely around their rotation axis 9 by 180°. In that an intermediate product is moved from a first to a second position where it is over molded or interconnected to a second material and/or color component. In the shown embodiment the holding frame is via the driving means 24 actuated completely independent of the movement of the second mold half, respectively the injection molding machine. Thereby it becomes possible to increase the speed and precision compared to devices as know from the prior art. A further advantage of the described device consists in that less mass has to moved which over all allows faster linear displacement and rotation overall.

**Figures 3, 4** and **5** are showing in a simplified manner details of a device 1 according to **Figures 1** and **2** in perspective vies (Figures 3 and 4) and a plane view (Figure 5). The Figures are showing two first cavity halves 14 interconnected to the first mold half 2 (see Figures 1, 2) and second cavity halves 15 interconnected to the second mold half 3 (see Figures 1, 2), spaced a distance x1 apart. The minimum open distance x1 is chosen such that the rotary arm 8, comprising an axle 12 and a lateral element 13, can rotate about the rotation axis 9 without collision with other elements. The lateral elements 13 have an in general z-shaped cross section (perpendicular to the rotation axis 9) carrying on their inside movable cavity halves 28 suitable to interact in closed position with the first and the second cavity halves 14, 15. The rotary arm 8 is arranged in a 0° (respectively 180°) position as it is when the device 1 is opened or before closing. The first, the second and the movable cavity halves 14, 15, 28 are aligned in y- and in z-direction such that they mate when the device 1 is closed in x-direction. To avoid unwanted tilting of the rotary arm 8 centering means 29 are centering and positioning the movable cavity halves 28 of the lateral elements 13 with respect to the first and the second cavity halves 14, 15 of the first and the second mold halves 2, 3. The centering means 29, if appropriate, at least partially conically shape to optimize centering. The centering means 29 are extending in general perpendicular from the fist mold half 2 in x-directions and are interacting with corresponding centering openings 30 of the rotary arm 8. If appropriate additional centering means/openings may be foreseen in the second mold half 3. The rotating arms 8 of the shown embodiment further comprises wedge elements 31 arranged at an angle α with respect to the lateral elements 13. The wedge element 31 controls additional mold functions such as a slider 32 which is necessary to demould complicated products, e.g. having undercuts, during opening and/closing of the device. The wedge element 31 interacts with a corresponding wedge opening 35 of the slider 32. Because the lateral element 13 is rotated by each cycle 180° it comprises on both sides a wedge element 32. A first and a second material component of liquefied plastic material is injected through first and second injection channels 33, 34 arranged in the first stationary mold half 2 into first and second cavities formed in closed position of the device by the first, respectively the second and the movable mold halves 14, 15, 28.

As best visible in **Figure 5** the second cavity halves 15.1, 15.2 of the first and the second mold halves 2, 3 are interacting (schematically indicated by lines 36) in closed position of the injection molding device 1 at least partially directly with each other forming a first part (first rectangle 37) of a second cavity. Simultaneously the movable mold half 14 interacts with part of the second mold 15 half forming a second part (second rectangle 38) of a second cavity. A first cavity is built by a first cavity half 14 of the first mold half 2 and a movable cavity half 28 of the rotary arm 8 (schematically indicated by third rectangle 39).

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. Injection molding device for making of a product comprising at least one first and at least one second material component, said injection molding device comprising a stationary first mold half, an in a first direction displaceable second mold half and a holding frame, arranged between the first and the second mold half and displaceable in the first direction, comprising at least one rotary arm, which is rotatable around a rotation axis and which comprises at least one lateral element of an in-mold transfer system with a pair of movable cavity halves each other arranged axially symmetric with respect to the rotation axis and forming in a closed position of the device at least part of first and second cavities by interacting with first and second cavity halves arranged at the first and the second mold half.

2. The injection molding device according to claim 1, **wherein** part of the second cavity is formed by direct interaction of the first and the second cavity halves of the first and the second mold halves.

3. The injection molding device according to one of the previous claims, **wherein** the stationary first mold half comprises a first material inlet interconnected by a first channel to the first cavities and a second material inlet interconnected by a second channel to the second cavities, said material inlets being suitable to guide liquefied plastic material into the first and the second cavities during an injection process.

4. The injection molding device according to one of the previous claims, **wherein** the lateral element has an in general z-shaped cross section.

5. The injection molding device according to one of the previous claims, **wherein** the holding frame is supported by a holding means integrated in the injection molding device.

6. The injection molding device according to claim 5, **wherein** the holding means comprises rods arranged parallel to the first direction and interconnected to the stationary first mold half and the holding frame comprises linear bearings by which it is displaceable along the rods.

7. The injection molding device according to claim 5 or 6, **wherein** the rods are in general free at one end.

8. The injection molding device according to claim 7, **wherein** the rods at their free end are temporarily supported by sprocket holes when the injection molding device is in closed position.

9. The injection molding device according to one of the previous claims, **wherein** the holding frame comprises three rotary arms arranged laterally adjacent to each other.

10. The injection molding device according to claim 9, **wherein** each rotary arm comprises two pairs of lateral elements arranged adjacent to each other each pair being arranged in one of six openings of the holding frame.

11. The injection molding device according to one of the previous claims, **wherein** each rotary arm is supported on each side and in the middle by a pivot bearing.

12. The injection molding device according to one of the previous claims, **wherein** at least one rotary arm comprises a wedge element which controls the position of at least one slider forming part of the first and/or the second mold half.

13. The injection molding device according to claim 12, **wherein** the wedge element is arranged at an angle α or in general perpendicular with respect to a lateral element.

14. The injection molding device according to one of the previous claims, **wherein** at least one mold half and/or the at least one rotary arm comprises a centering element to position the rotary arm before closing of the mold.
